# EUROPÄISCHE PATENTSCHRIFT

(11) **EP 1 034 420 B1**
(45) Veröffentlichungstag und Bekanntmachung des Hinweises auf die Patenterteilung: **06.10.2004**
(21) Anmeldenummer: 98964456.2
(22) Anmeldetag: 27.11.1998
(51) Int. Cl.: G01N 1/12

(54) **VORRICHTUNG ZUR ENTNAHME VON SCHLACKENPROBEN**
DEVICE FOR REMOVING SLAG SAMPLES
DISPOSITIF POUR LE PRELEVEMENT D'ECHANTILLONS DE LAITIER

(30) Priorität: 28.11.1997 DE 19752743
(43) Veröffentlichungstag der Anmeldung: 13.09.2000
(73) Patentinhaber: Minkon Sampler-Technik GmbH Probennahme Aus Metallschmelzen, 40689 Erkrath (DE)
(72) Erfinder: WÜNSCH, Hartmut, D-40822 Mettmann (DE); WÜNSCH, Gerhard, D-40822 Mettmann (DE)
(74) Vertreter: König, Reimar, Dr.-Ing.
(86) Internationale Anmeldenummer: PCT/EP1998/007683
(87) Internationale Veröffentlichungsnummer: WO 1999/028727

(56) Entgegenhaltungen:
- EP-A- 0 087 219
- EP-A- 0 107 219
- DE-A- 2 946 429
- DE-A- 3 435 688
- DE-C- 3 233 677
- DE-C- 4 403 286
- FR-A- 2 247 721
- US-A- 3 646 816
- US-A- 3 748 908
- US-A- 4 048 857
- US-A- 4 074 578

## Beschreibung

Die Erfindung betrifft eine Vorrichtung sowie ein Verfahren zur Entnahme von Schlackenproben aus eisen- oder stahlerzeugenden Anlagen.

Zur Entnahme von Roheisenschlackenproben aus beispielsweise Rinne, Fuchs oder Pfanne oder zur Entnahme von Stahlschlackenproben aus einem Konverter, Pfanne, EUS-Ofen oder Behandlungsanlagen sind verschiedene Verfahren bekannt, die in der Regel zunächst zu Proben führen, die, um für eine spektrometrische Analyse verwendbar zu sein, in einem aufwendigen Prozeß zu einer talerförmigen Schlackenprobe verarbeitet werden müssen.

So wird nach einem bekannten Verfahren zur Schlackenprobenentnahme zunächst eine Stahlstange oder ein ähnlicher Metallgegenstand in die Schmelze eingetaucht. Dazu können einfache Stahlrohre, Stahlstangen oder auch aufwendiger gestaltete Elemente größerer Oberfläche, die außen an einer Tauchprobenoder Tauchtemperatursonde befestigt sein können, verwendet werden. Beim Herausziehen des Metallgegenstandes aus der Schmelze bleibt die Schlacke an der Metalloberfläche haften. Zur Vorbereitung der Schlackenprobe für die Analyse muß die Schlacke von dem Metallgegenstand abgeschlagen und die einzelnen Schlackenstücke zu einer talerförmigen Probe weiterverarbeitet werden.

Die Verarbeitung der Schlacke kann teilweise bis zu einer Stunde dauern und macht dieses Probenentnahmeverfahren zeit- und kostenintensiv. Neben dem hohen Verarbeitungsaufwand können auch Ergebnisverfälschungen bei der Analyse aufgrund unreiner Proben bei mehrfacher Verwendung und dadurch bedingte Kontamination der Entnahmesonden auftreten. In der Regel wird zwar die Restschlacke der vorhergehenden Probenentnahme gründlich von der Oberfläche der Entnahmesonde entfernt, doch sind in der Praxis Meßwertverfälschungen aufgrund von Schlackeresten kaum zu vermeiden.

Weitere Meßwertverfälschungen sind auf Zusatzstoffe wie Bindemittel zurückzuführen, die bei der Aufbereitung der Schlackenprobe für die Analyse in die Probe eingebracht werden müssen.

Eine entsprechende Probenentnahme ist in der US-Patentschrift 5 435 196 beschrieben.

Die beschriebene, weit verbreitete Verfahrensweise liefert somit noch keine befriedigenden Ergebnisse. Bei einem neuen Verfahren wird die Schlackenprobe von der Schmelzenoberfläche mit Hilfe einer Saugsonde abgesaugt. Die Sonde entspricht in ihrer Bauweise im wesentlichen den zur Probenentnahme aus der Stahlschmelze eingesetzten Sonden.

Die Sonde kann jedoch nicht, anders als bei der Stahlprobenentnahme, in die Schmelze eingetaucht werden, sondem muß mit ihrer Einlauföffnung präzise in der Schlackenschicht positioniert werden. Dies bereitet bei dünnen Schlackenschichten erhebliche Schwierigkeiten, da sich eine Kontamination der Probe mit flüssigem Metall nur schwer vermeiden läßt. Auch bei bestimmten metallurgischen Gefäßen, wie beispielsweise Konvertem oder Behandlungsanlagen, ist eine Probenentnahme mit Hilfe der Saugsonde aufgrund von Positionierungsschwierigkeiten kaum möglich. Wird die Sonde zu tief eingetaucht, so daß Metallschmelze mit in die Probenkokille gelangt, ist die Schlackenprobe für die Analyse unbrauchbar.

Die entnommenen Schlackenproben sind spröde und neigen zur Rißbildung, was zum Brechen der Proben führen kann. Für die spektrometrische Analyse läßt sich die Probe dann nicht mehr verwenden.

JP 61-271 452 offenbart einen Schlackenprobennehmer, bei dem ein als Öffnung der Probenkammer ausgebildeter Schlackeneinlauf am unteren Ende der Probenkammer ausgebildet ist. Die Schlacke dringt durch die untere Öffnung in die Probenkammer ein. Diese Konstruktion birgt jedoch insbesondere bei sehr dünnen Schlackenschichten die Gefahr, daß die Probenkammer aufgrund des niedrigen ferrostatischen Druckes nicht ausreichend befüllt wird, so daß beim Durchstoßen der Schlackenschicht Schmelze durch die Öffnung der Probenkammer in diese eindringen kann. Dies führt zu Verunreinigungen.

Auch die aus dem Bereich der Stahlprobenentnahme bekannten Probensonden, beispielsweise mit einer Abkühlplatte für die Probe, lassen sich für die Entnahme von Schlackenproben nicht verwenden. Solche Sonden liefern zwar aus der Stahlschmelze eine gut analysierbare Probe, indem der Stahl auf der Abkühlplatte eine brauchbare Analysenfläche ausbildet. Meist liefert eine solche Sonde keine für die Schlackenanalyse brauchbaren Schlackenproben, da die abgekühlte Schlacke an der Abkühlplatte bricht bzw. reißt und dann für eine Analyse nicht mehr zu verwerten ist.

Metallprobennehmer der bekannten Art sind beispielsweise in EP 087 219, US 4074578 und FR 2247721 offenbart.

EP 087219 offenbart einen Metallprobennehmer mit einem am unteren Ende der Probenkammer angeordneten kanalartigen Einlauf. Der Einlauf soll mit einer Schutzkappe versehen werden, um das Eindringen von Schlacke zu vermeiden. Der Metallprobennehmer ist für die Entnahme von Schlackenproben nicht geeignet, da die Probenkammer aufgrund der Konstruktion und der Länge des Einlaufkanals insbesondere bei dünnen Schlackenschichten nicht vollständig mit reiner Schlacke gefüllt werden kann. Auch die US 4074578 offenbart einen ähnlich konstruierten Metallprobennehmer, der aus denselben Gründen nicht zur Probennahme von Schlacke geeignet ist.

Die FR 2247721 offenbart eine Vorrichtung zur Generierung einer Schöpfprobe aus einer Metallschmelze, mit einer Kokille und einem oberhalb angeordneten Einlauftrichter. Die Kokille wird befüllt, indem die Schmelze mittels eines Löffels in den Einlauftrichter überführt wird. Nach Befüllung der Kokille wird der Trichter abgeschlagen. Dies ist umständlich. Eine derart konstruierte Vorrichtung wäre zur direkten Entnahme einer reinen Probe aus einer dünnen Schlackenschicht auch nicht geeignet, da der großvolumige Trichter sich beim versehentlichen Durchdringen der Schlackenschicht sofort mit Schmelze füllen und die Probe verunreinigen würde.

Für den Bereich der Stahlprobenentnahme besteht das Problem der Eintauchtiefe nicht, da die Stahlprobensonde beliebig tief in die Schmelze eingetaucht werden kann, um eine Stahlprobe zu entnehmen, ohne daß die Gefahr besteht, daß, wie bei der Schlackenprobenentnahme, eine Kontamination der Probe aufgrund einer Fehlpositionierung der Entnahmesonde zu befürchten ist.

Selbst bei feinfühliger Positionierung einer Stahlprobensonde in der Schlackenschicht läßt sich eine reine Schlackenprobe kaum erreichen. Daher sind Metallprobennehmer auch nicht für die Entnahme von Schlackenproben geeignet.

Der Erfindung liegt daher das Problem zugrunde, eine Schlackenprobeentnahmevorrichtung zu schaffen, die auch bei dünnen Schlackenschichten eine einfache und sichere Probenentnahme erlaubt. Femer soll ein entsprechendes Verfahren zur Verfügung gestellt werden.

Das Problem wird gelöst durch einen Schlackenprobennehmer, der einen Probenraum und einen Kokilleneinlauf aufweist, der unterhalb des Probenraumes angeordnet ist und einen geringeren Durchmesser als der Probenraum aufweist. Unterhalb des Kokilleneinlaufs ist ein Einlauftrichter angeordnet, dessen Volumen größer ist als das Volumen des Probenraumes. Beim Eintauchen des Schlackenprobennehmers füllt sich der großvolumige Einlauftrichter mit Schlacke, die dann durch den Kokilleneinlauf in die Probenkammer gelangt. Durch den großvolumigen Einlauftrichter wird die Probenkammer selbst bei sehr dünnen Schlackenschichten vollständig mit Schlacke gefüllt, da diese besser abgeschöpft wird.

Beim Eintauchen der Probenentnahmevorrichtung in die Schlackenschicht füllt sich die Probenkammer durch die unterhalb der Probenkammer liegende Einlauföffnung (Kokilleneinlauf) mit Schlacke. Dabei bildet sich an der oberen Begrenzungsfläche der Probenkammer (Abkühlplatte) eine Analysenfläche aus. Eine Kontamination der Schmelze ist nun bereits dadurch ausgeschlossen, daß die Schlacke aufgrund ihres in bezug auf die Schmelze geringeren spezifischen Gewichtes immer zuerst in die Probenkammer eintritt. Vorzugsweise ist die Probenkammer bezüglich ihres Volumens so ausgestaltet, daß sie in jedem Falle unabhängig von der Eintauchtiefe der Probensonde vollständig nur mit Schlacke gefüllt wird.

Der Querschnitt der Einlauföffnung in mindestens in einem Bereich im Verhältnis zum Probenraumquerschnitt gering, während der vorzugsweise ringförmige Probenraum eine geringe Höhe im Verhältnis zu seinem Querschnitt aufweist.

Der in Bezug auf den Probenraum enger ausgestaltete Kokilleneinlauf führt zu einer sauberen Trennebene zwischen Schlacke und Stahl, selbst wenn eine Schlackenprobe von einer lediglich dünnen Schlackenschicht entnommen wird und Stahl mit in den Einlauf gelangt. Der Durchmesser des Einlaufs ist so dimensioniert, daß die im Probenraum befindliche Schlacke einfriert und diese bei Herausnahme der Sonde aus der Schmelze nicht wieder aus der Probenkokille auslaufen kann.

Der Einlaufbereich vor dem Kokilleneinlauf ist erfindungsgemäß trichterförmig ausgebildet, wobei die Dimensionierung des Trichters so gewählt ist, daß selbst bei sehr dünnen Schlackenschichten eine sichere stahlfreie Schlackenprobenentnahme möglich ist. Unter solchen Bedingungen wird ein breiter Trichterdurchmesser mit geringer Trichterhöhe gewählt, so daß ein Zugriff auf eine größere Schlackenfläche möglich ist, die ihren Weg dann über den Einlauftrichter in die Probenkammer mit relativ geringem Durchmesser findet, so daß die Probenkammer trotz der dünnen Schlackenschicht vollständig von Schlacke gefüllt wird. Das Volumen des Einlauftrichters ist daher größer als das Volumen der Probenkokille.

Ferner wird das Problem der Erfindung dadurch gelöst, daß der Probenraum durch eine Metallplatte begrenzt ist, die eine Wandstärke von weniger als 2 mm aufweisen kann. Diese geringe Wandstärke der Metallplatte vermeidet aufgrund der geringeren Wärmeleitung ein zu schnelles Abkühlen der Schlackenoberfläche, wodurch ein Reißen der Schlackenprobe verhindert wird.

Mit der auf der Metallplatte entstandenen Probenoberfläche ist eine direkte Analyse der Schlackenprobe ohne oder mit nur geringfügiger Bearbeitung möglich. Zur weiteren Erleichterung der Probenanalyse kann im Schlackenraum ein Probenring ausgebildet sein, der die Probe beim Transport und während der Analyse umschließt, stabilisiert und dem Probenraum zusammen mit der Schlackenprobe entnommen wird. Insbesondere beim Entfernen der Probe aus dem Probenraum wird so verhindert, daß die Probe durch mechanische Einwirkungen zerbricht. Darüber hinaus ermöglicht der Probenring eine exakte Fixierung der Probe in der Aufnahmemimik der Analyseautomaten.

Für eine Probenentnahme wird die erfindungsgemäße Sonde durch die Schlacke durchgetaucht, woraufhin sich die Probenkokille aufgrund des ferrostatischen Drucks füllt. Reicht dieser nicht aus, kann die Sonde weiter eingetaucht werden.

Das Füllen der Probenkokille kann durch Erzeugen eines Unterdrucks unterstützt werden. Der möglichst geringe Innendurchmesser des Kokilleneinlaufs verhindert ein Auslaufen der Probe, nachdem der Probenraum gefüllt ist und die Sonde aus der Schlacke entfernt wird.

Der Probenring kann unterbrochen sein, um eine Trennung von Probenring und Probe - falls erforderlich - zu erleichtern. Vorzugsweise verbleibt die Probe aber, wie oben beschrieben, im Probenring. Der Probenring kann darüber hinaus Einkerbungen oder Riefen aufweisen, um die Haftung der Probe im Ring zu vergrößern und dadurch ein Herausfallen der Probe zu verhindern.

Bei einer anderen Ausführungsform der Erfindung sind Kokille und Metallplatte unterhalb des Schlackeneinlaufs angeordnet, der vorzugsweise in Form eines oder mehrerer seitlicher Einlauföffnungen ausgebildet ist. Die von oben einlaufende Schlacke erstarrt dann auf der dünnen Metallplatte und bildet so eine brauchbare Analysenoberfläche aus. Auch bei dieser Ausführungsform kann ein Probenring für die Entnahme und den Schutz der Schlackenprobe vorgesehen sein, der dann aber oberhalb der Metallplatte angeordnet ist. Auch diese Ausführungsform erlaubt so eine direkte Probenanalyse ohne weitere Bearbeitung bzw. Vorbereitung der Schlackenprobe für die Aufnahmemimik der Analysegeräte. Bei dieser Ausführungsform erweist sich die unten liegende Analysefläche als besonderer Vorteil, da in der flüssigen Schlacke befindliche Gasblasen nach oben aufsteigen, so daß die Analysefläche weniger Gasblasen aufweist und somit eine qualitativ bessere Analysefläche liefert.

Diese Ausführungsform hat ebenfalls Vorteil bei der Schlackenprobennahme aus geringer Badtiefe wie beispielsweise in der Schlackenrinne am Hochofen.

Mit der Erfindung wird ferner ein Verfahren zur Entnahme von Schlackenproben aus einem Metallbad zur Verfügung gestellt, bei dem die Schlacke mit Hilfe des ferrostatischen Drucks des Metallbades in einen Probenraum (2) eines erfindungsgemäßen Schlackenprobennehmers eingebracht wird, wobei der Schlackenprobennehmer zur Entnahme einer Probe in das metallurgische Bad (32) abgesenkt wird, bis der Schlackenprobennehmer im Bereich des Einlauftrichters (4) mit der Schlackenoberfläche in Berührung kommt. Dabei wird der Querschnitt und die Geometrie des Einlauftrichters (4) in Abhängigkeit von der Dicke der Schlackenschicht (31) so gewählt, daß eine ausreichende Schlackenmenge in den Probenraum (2) eintreten kann, ohne daß Schmelze in den Probenraum eindringt. Dies ermöglicht eine sichere, verunreinigungsfreie Schlackenprobennahme.

Im folgenden wird die Erfindung anhand eines in der Zeichnung dargestellten Ausführungsbeispiels des näheren erläutert.

In der Zeichnung zeigen:
- Fig. 1: eine erfindungsgemäße Vorrichtung zur Probenentnahme von Schlackenproben mit einem unterhalb einer Metallplatte angeordneten Probeneinlauf;
- Fig. 2: eine erfindungsgemäße Vorrichtung mit oberhalb der Metallplatte angeordneten Schlackeneinläufen.
- Fig. 3: eine schematische Darstellung einer Probenentnahme mit einer erfindungsgemäßen Vorrichtung.
- Fig. 4: eine Kombisonde mit der Vorrichtung der Fig.1.

Die Vorrichtung zur Schlackenprobenentnahme besteht aus einer im Querschnitt kreisförmigen Sonde 1 mit einem Probenraum 2, einem Kokilleneinlauf 3 und einem Einlauftrichter 4. Der Probenraum 2 ist nach oben, d.h. in Richtung der Sonde durch eine metallische Abkühlplatte 5 begrenzt. Die Probenentnahmeeinheit 2,3,4,5 befindet sich im unteren, d.h. der Schlacke zugewandten Bereich der Sonde 1, die in ihrem oberen Bereich aus einem Papp-rohr 8 besteht.

Der unterhalb der Abkühlplatte 5 angeordnete Probenraum 2 steht über den Kokilleneinlauf 3 mit dem Einlauftrichter 4 in Verbindung. Der Kokilleneinlauf 3 weist einen in bezug auf den Querschnitt des Probenraumes und des Einlauftrichters geringen Querschnitt auf.

Der Probenraum 2 ist von einem Probenring 7 umgeben, der die Schlackenprobe auch in erstarrtem Zustand umschließt und mit dieser aus der Sonde entnommen werden kann.

Zur Entnahme einer Probe wird die Sonde in das metallurgische Gefäß 30 abgesenkt, bis sie im Bereich des Einlauftrichters 4 mit der Schlackenoberfläche in Berührung kommt. Der Querschnitt und die Geometrie des Einlauftrichters 4 ist in Abhängigkeit von der Dicke der Schlackenschicht 31 gewählt, so daß eine ausreichende Schlackenmenge in den Probenraum 2 eintreten kann, ohne daß Schmelze 32 in den Probenraum eindringt. Bei einer besonders dünnen Schlackenschicht 31 wird daher ein Einlauftrichter mit einem besonders großen Querschnitt gewählt, um auf die Substanz einer möglichst großen Schlackenfläche zurückgreifen zu können.

Sobald der Einlauftrichter 4 eine ausreichende Eintauchtiefe in die Stahlschmelze 32 erreicht hat, steigt die Schlacke aufgrund des ferrostatischen Drucks über den Kokilleneinlauf 3 in die Probenkammer 2, wobei die in dem Kokilleneinlauf und der Probenkammer 2 befindliche Luft über Entlüftungsöffnungen 6 entweicht. Wenn der Probenraum 2 mit Schlacke gefüllt ist, kommt die oberste Schlackenschicht mit der Abkühlplatte 5 in Berührung, die bezüglich ihrer Dicke so dimensioniert ist, daß der Abkühlvorgang nicht zum Reißen oder Brechen der erstarrten Schlacke führt. Auch die Materialwahl der Abkühlplatte kann zu diesem Zwecke variiert werden. Der Kokilleneinlauf 3 mit seinem geringen Querschnitt verhindert einerseits ein Wiederauslaufen der Schlackenprobe und liefert andererseits - selbst wenn bei außerordentlich dünnen Schlackenschichten Metallschmelze mit in den Schlackeneinlauf gerät - eine definierte Trennebene zwischen Schmelze und Schlacke, so daß der Probenraum in jedem Falle von Metallschmelze freigehalten wird.

Die nach der Probenentnahme im Probenraum 2 befindliche Schlackenprobe ist seitlich durch den Probenring 7 begrenzt, der die Schlackenprobe vollständig umgreift. Der Probenring 7 besitzt an seiner inneren, mit der Probe in Kontakt stehenden Fläche eine Oberflächenstruktur, die ein Herausfallen der Probe verhindert. Dies kann zum Beispiel durch Einkerbungen oder Riefen erreicht werden. Die Schlackenprobe kann nach dem Erstarren zusammen mit dem Probenring 7 aus der Sonde 1 entnommen werden. Die Abmessungen des Probenrings 7 sind so gewählt, daß dieser direkt in die Aufnahmemimik eines Analysegerätes eingesetzt werden kann. Aufgrund der Verwendung der Abkühlplatte 5 besitzt die Probe eine Oberfläche, die eine sofortige Analyse ohne vorherige Bearbeitung der Schlackenprobe erlaubt. Darüber hinaus ist die bruchanfällige Schlackenprobe beim Auspacken der Probe aus der Sonde und auch beim Transport geschützt, nämlich durch den Probenring 7.

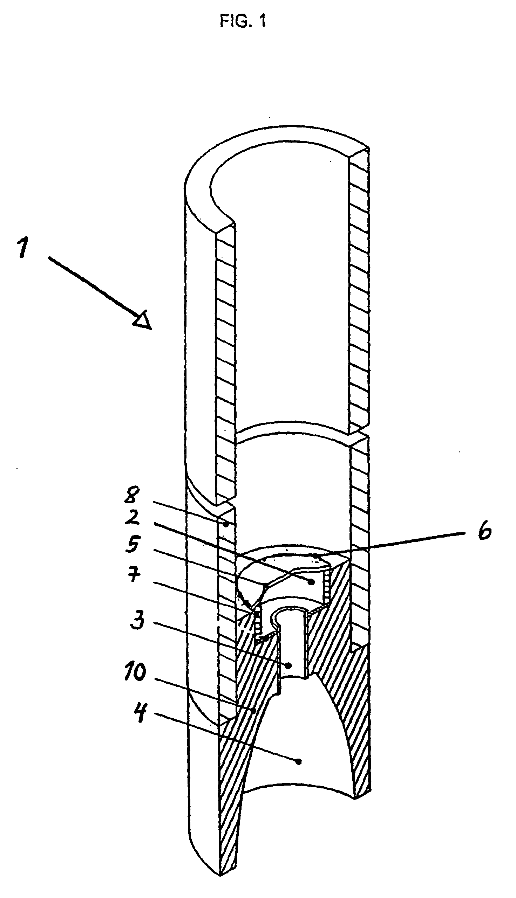

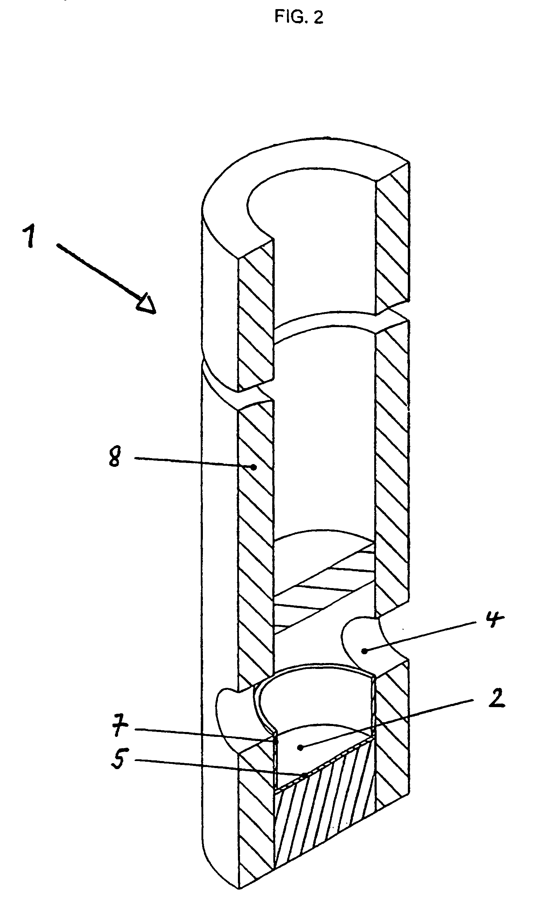

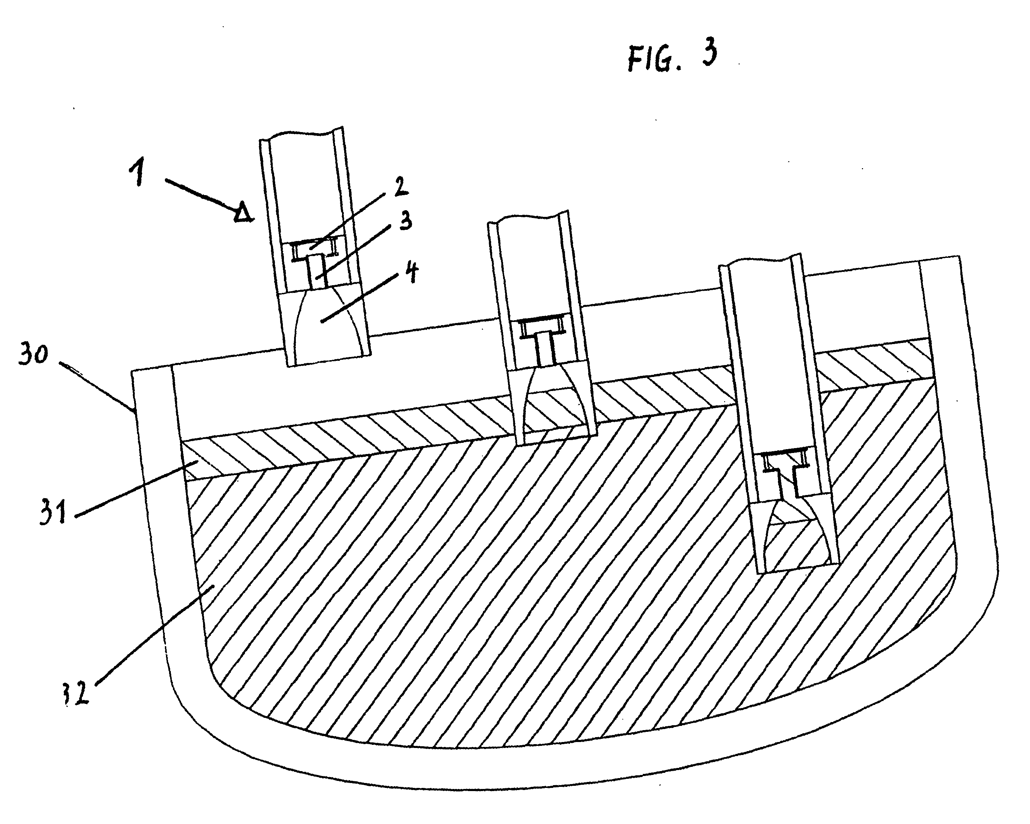

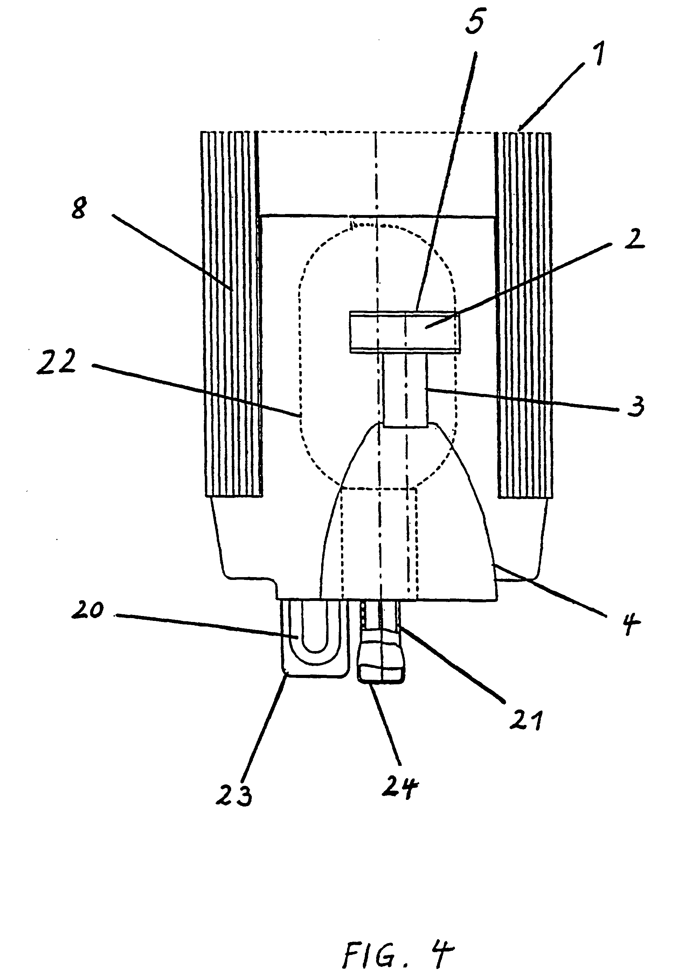

Die oben beschriebene und in Fig. 1 dargestellte Schlackensonde erlaubt somit eine sichere Schlackenprobenentnahme, auch wenn die Sonde bis in die Schmelzenschicht eingetaucht wird, da aufgrund der geometrischen Verhältnisse des Einlauftrichters, des Schlackeneinlaufs und des Probenraumes ausschließlich Schlacke in den Probenraum eintreten kann. Durch Verwendung einer Saugpumpe kann darüber hinaus das Eintreten der Schlacke in den Probenraum unterstützt werden.

Eine andere Ausführungsform der Erfindung ist in Fig. 2 dargestellt. Bei dieser Ausführungsform befindet sich der Kokilleneinlauf 3a, 3b oberhalb des Probenraumes, so daß die Schlacke beim Eintauchen der Sonde in die Schlackenschicht in den Probenraum 2 hinabfließt und auf der nun am Boden des Probenraumes angeordneten Abkühlplatte 5 aufliegt. Der Probenraum 2 ist auch bei dieser Ausführungsform seitlich von einem Probenring 7 begrenzt, so daß die Schlackenprobe der Sonde problemlos entnommen werden und in die Aufnahmemimik der Analysegeräte eingesetzt werden kann.

Die Probe selbst weist eine qualitativ hochwertige, von durch Gasblasen bedingten Unebenheiten freie Analysefläche auf, da die Gasblasen in der flüssigen Schlacke in der Kokille aufsteigen und somit aus dem Bereich der Abkühlplatte, das heißt der späteren Analysefläche entweichen.

Bei der Schlackenprobenentnahme aus Bädern mit geringer Badtiefe besteht darüber hinaus der Vorteil, daß sich die Kokille füllt, selbst wenn der ferrostatische Druck aufgrund der geringen möglichen Eintauchtiefe sehr niedrig ist.

Die erfindungsgemäße Vorrichtung bzw. die beschriebenen Ausführungsformen sind auch in einer Kombisonde, beispielsweise zusammen mit einer Blaslanze, einer Temperaturmeßsonde, einer Stahlprobenentnahmevorrichtung, einem Badstandsmesser, einer EMK-Messvorrichtung und/oder einer Sauerstoffzelle einsetzbar. Die erfindungsgemäße Vorrichtung kann dann als Sublanze ausgebildet sein und lediglich eine von vielen Funktionen der Kombisonde ausüben.

In Fig. 4 ist eine solche Kombisonde dargestellt mit einem Thermoelement 20 und einem Stahlprobeneinlauf 21 mit der dazugehörigen Kokille 22. Thermoelement und Stahlprobeneinlauf sind durch Stahlkappen 23,24 gegen die Schlackeneinwirkung beim Eintauchen geschützt.

Die Abkühlplatte besteht bei allen Ausführungsformen vorzugsweise aus Stahl, kann aber alternativ aus Keramik, NE-Metall oder anderen Materialien bestehen. Bei der Ausführungsform gemäß Fig. 2 können die seitlichen Einläufe auch auf Höhe der Probenkokille angeordnet sein.

## Patentansprüche

1. Schlackenprobennehmer mit
- einem Probenraum (2),
- einem Kokilleneinlauf (3), der unterhalb des Probenraums (2) angeordnet ist und einen geringeren Durchmesser als die Probenkammer aufweist und
- einem unterhalb des Kokilleneinlaufs angeordneten Einlauftrichter (4), wobei das Volumen des Einlauftrichters (4) größer ist als das Volumen des Probenraums (2),
- wobei sich beim Eintauchen des Schlackenprobennehmers der Einlauftrichter (4) mit Schlacke füllt, welche durch den Kokilleneinlauf (3) in den Probenraum (2) gelangt.

2. Schlackenprobennehmer nach Anspruch 1, **dadurch gekennzeichnet, daß** mindestens eine Wandfläche des Probenraums (2) als Abkühlplatte (5) ausgebildet ist.

3. Schlackenprobennehmer nach Anspruch 1 oder 2, **dadurch gekennzeichnet, daß** ein entnehmbar im Probenraum (2) angeordneter Probenring (7) die Seitenwände des Probenraumes auskleidet.

4. Schlackenprobennehmer nach Anspruch 2, **dadurch gekennzeichnet, daß** die Abkühlplatte (5) aus metallischem oder keramischem Werkstoff besteht.

5. Schlackenprobennehmer nach Anspruch 2 oder 4, **dadurch gekennzeichnet, daß** die Abkühlplatte (5) eine Dicke von maximal 2 mm aufweist.

6. Schlackenprobennehmer nach Anspruch 2 oder 4, **dadurch gekennzeichnet, daß** die Abkühlplatte (5) eine Dicke von etwa 0,5 mm aufweist.

7. Schlackenprobennehmer nach einem oder mehreren der Ansprüche 3 bis 6, **dadurch gekennzeichnet**, das der Probenring (7) mehrteilig ausgebildet ist.

8. Schlackenprobennehmer nach einem oder mehreren der Ansprüche 1 bis 7, **dadurch gekennzeichnet, daß** der Querschnitt der Probenform größer ist als die Probendicke.

9. Verfahren zur Entnahme von Schlackenproben aus einem Metallbad, **dadurch gekennzeichnet, daß** die Schlacke mit Hilfe des ferrostatischen Drucks des Metallbades in einen Probenraum (2) eines Schlackenprobennehmers nach einem oder mehreren der Ansprüche 1 bis 8 eingebracht wird, wobei der Schlackenprobennehmer zur Entnahme einer Probe in das metallurgische Bad (32) abgesenkt wird, bis der Schlackenprobennehmer im Bereich des Einlauftrichters (4) mit der Schlackenoberfläche in Berührung kommt, wobei der Querschnitt und die Geometrie des Einlauftrichters (4) in Abhängigkeit von der Dicke der Schlackenschicht (31) so gewählt ist, daß eine ausreichende Schlackenmenge in den Probenraum (2) eintreten kann, ohne daß Schmelze in den Probenraum eindringt.

## Claims

1. Slag sampler having
- a sample chamber (2),
- a mould inlet (3) which is arranged below the sample chamber (2) and is of smaller diameter than the sample chamber and
- an inlet funnel (4) arranged below the mould inlet, the volume of the inlet funnel (4) being larger than the volume of the sample chamber (2),
- the inlet funnel (4) filling with slag when the slag sampler is dipped in, which slag makes its way through the mould inlet (3) into the sample chamber (2).

2. Slag sampler according to claim 1, **characterised in that** at least one wall surface of the sample chamber (2) is in the form of a cooling plate (5).

3. Slag sampler according to claim 1 or 2, **characterised in that** a sample ring (7), which is removably arranged in the sample chamber (2), lines the side-walls of the sample chamber.

4. Slag sampler according to claim 2, **characterised in that** the cooling plate (5) is composed of metallic or ceramic material.

5. Slag sampler according to claim 2 or 4, **characterised in that** the cooling plate (5) has a thickness of not more than 2 mm.

6. Slag sampler according to claim 2 or 4, **characterised in that** the cooling plate (5) has a thickness of approximately 0.5 mm.

7. Slag sampler according to any of claims 3 to 6, **characterised in that** the sample ring (7) is in multi-piece form.

8. Slag sampler according to any of claims 1 to 7, **characterised in that** the cross-section of the sample mould is greater than the thickness of the sample.

9. Method of taking samples of slag from a bath of metal, **characterised in that**, with the help of the ferrostatic pressure of the bath of metal, the slag is introduced into a sample chamber (2) of a slag sampler according to any of claims 1 to 8, the slag sampler being lowered into the metallurgical bath (32) to allow a sample to be taken until the slag sampler comes into contact with the surface of the slag in the region of the inlet funnel (4), the cross-section and geometry of the inlet funnel (4) being selected to be such, as a function of the thickness of the layer of slag (31), that an adequate amount of slag is able to enter the sample chamber (2) without molten metal penetrating into the sample chamber.

## Revendications

1. Dispositif pour le prélèvement d'échantillons de laitier comprenant
- une cavité à échantillon (2),
- une entrée de lingotière (3) situé sous la cavité à échantillon (2) et présentant un diamètre inférieur à la chambre à échantillon et
- un entonnoir d'entrée (4) placé sous l'entrée de la lingotière, sachant que le volume de l'entonnoir d'entrée (4) est supérieur au volume de la cavité à échantillon (2),
- sachant que lors de l'immersion du dispositif pour le prélèvement d'échantillon de laitier, l'entonnoir d'entrée (4) se remplit de laitier qui arrive via l'entrée de la lingotière (3) dans la cavité à échantillon (2).

2. Dispositif pour le prélèvement d'échantillons de laitier selon la revendication 1, **caractérisé en ce qu'**au moins une surface de paroi de la cavité à échantillon (2) est conçue en tant que plaque de refroidissement (5).

3. Dispositif pour le prélèvement d'échantillons de laitier selon la revendication 1 ou 2, **caractérisé en ce qu'**un anneau à échantillon (7) placé de façon amovible dans la cavité à échantillon (2) habille les parois latérales de ladite cavité à échantillon.

4. Dispositif pour le prélèvement d'échantillons de laitier selon la revendication 2, **caractérisé en ce que** la plaque de refroidissement (5) est composée d'un matériau métallique ou de céramique.

5. Dispositif pour le prélèvement d'échantillons de laitier selon la revendication 2 ou 4, **caractérisé en ce que** la plaque de refroidissement (5) présente une épaisseur de 2 mm au maximum.

6. Dispositif pour le prélèvement d'échantillons de laitier selon la revendication 2 ou 4, **caractérisé en ce que** la plaque de refroidissement (5) présente une épaisseur d'environ 0,5 mm.

7. Dispositif pour le prélèvement d'échantillons de laitier selon l'une ou plusieurs des revendications 3 à 6, **caractérisé en ce que** l'anneau à échantillon (7) est réalisé en plusieurs parties.

8. Dispositif pour le prélèvement d'échantillons de laitier selon l'une ou plusieurs des revendications 1 à 7, **caractérisé en ce que** la section transversale du moule à échantillon est supérieure à l'épaisseur de l'échantillon.

9. Procédé pour prélever des échantillons de laitier dans un bain de métal fondu, **caractérisé en ce que** le laitier est introduit au moyen de la pression ferrostatique du bain de métal fondu dans une cavité à échantillon (2) d'un dispositif pour prélever des échantillons de laitier selon l'une ou plusieurs des revendications 1 à 8, sachant que le dispositif destiné à prélever un échantillon de laitier est plongé dans le bain métallurgique (32) jusqu'à ce que le dispositif pour prélever des échantillons de laitier entre en contact avec la surface du laitier dans la zone de l'entonnoir d'entrée (4), sachant que la section transversale et la forme géométrique de l'entonnoir d'entrée (4) sont choisies en fonction de l'épaisseur de la couche de laitier (31), de manière à ce qu'une quantité suffisante de laitier puisse pénétrer dans la cavité à échantillon (2), sans que du métal fondu n'entre dans ladite cavité à échantillon.
